# EUROPEAN PATENT APPLICATION

(11) **EP 3 859 601 A1**
(43) Date of publication of application: **04.08.2021**
(21) Application number: 20211399.9
(22) Date of filing: 03.12.2020
(51) Int. Cl.: G06K 9/00, B64F 1/36, G01V 5/00

(54) **ALERT OUTPUT TIMING CONTROL APPARATUS, METHOD AND STORAGE MEDIUM**

(30) Priority: 30.01.2020 JP 2020013841
(71) Applicant: Hitachi, Ltd., Tokyo 100-8280 (JP)
(72) Inventor: OZEKI, Noboru, Tokyo, 100-8280 (JP); HINOMIZU, Satoko, Tokyo, 100-8280 (JP); YASUMURA, Toru, Tokyo, 100-8280 (JP); MATSUBARA, Daisuke, Tokyo, 100-8280 (JP); KAJII, Koh, Tokyo, 100-8280 (JP); AKIRA, Naoto, Tokyo, 100-8280 (JP); KIMURA, Junichi, Tokyo, 100-8280 (JP); OKITA, Hideki, Tokyo, 100-8280 (JP)
(74) Representative: MERH-IP Matias Erny Reichl Hoffmann Patentanwälte PartG mbB

(57) **Abstract**

An alert output timing control apparatus is configured to hold an analysis target image and time information indicating a period of time time to be spent until alert is output, and output the analysis target image to a display apparatus. When the analysis target image is input to a model and it is determined that an alert target object is included in a photographic object of the analysis target image, the alert output timing control apparatus obtains a period of time time from the time information and performs control so that alert is output at timing that arrives when the obtained period of time time elapses since given timing after the analysis target image is output.

## Description

### CLAIM OF PRIORITY

The present application claims priority from Japanese patent application JP 2020-013841 filed on January 30, 2020, the content of which is hereby incorporated by reference into this application.

### BACKGROUND

The present invention relates to an alert output timing control apparatus, an alert output timing control method, and a non-transitory computer readable storage medium.

In baggage inspection at customs or an airport, and other similar scenes, an X-ray inspection apparatus is used to detect an interior of an inspection object by irradiating the inspection object with an X ray and imaging an intensity distribution of the X ray transmitted through the inspection object. An inspector checks whether a specific article, for example, an explosive, a firearm, or other hazardous objects, is mixed in, generally by looking at an X-ray image picked up by the X-ray inspection apparatus. However, the inspector is required to be highly trained in order to spot the mixing in of a specific article from reading the X-ray image, and the apparatus therefore has a mechanism of assistance display for assisting the inspector in reading the X-ray image.

One of technologies that are background art in a technical field of this invention is found in JP 2009-42134 A. In JP 2009-42134 A, there is a description "An X-ray irradiation apparatus 14 configured to irradiate an inspection object 5 with incident X rays 7 at a plurality of intensities from two or more different directions; an X-ray detection apparatus 16 configured to detect a thickness *x* of the inspection object from the intensities of transmitted X rays 8 transmitted through the inspection object, and from a plurality of X-ray transmission images; and an arithmetic unit 18 configured to identify a material of the inspection object by calculating an atomic number *Z* and an electron density *ρ* of the inspection object from the plurality of intensities, the intensities of the transmitted X rays, and the thickness are included. At least one of proportional constants A and B is approximately solved by utilizing linearity of an attenuation coefficient of an X ray in substances that have atomic numbers ranging from 4 to 30." (See Abstract.)

### SUMMARY OF THE INVENTION

With the technology described in JP 2009-42134 A, the material of contents of an inspection object is highly precisely identified but, ultimately, an inspector determines the mixing in of a specific article in the inspection object by visually inspecting an image. In addition, an inspection apparatus having a function of mechanically detecting a place suspected of the mixing in of a specific article, for example, a place high in material density in an image, and displaying the detected place on a screen is introduced in order to assist the inspector in the visual inspection.

However, considering that even an inspection apparatus having such a function is not enough to completely eliminate the possibility of inclusion of a hazardous object or the like that is undetectable with the function in baggage, the inspector is required to determine whether there is a hazardous object or the like by a visual check.

When the mixing in of a specific article in an inspection object is not detected by an inspection apparatus, an inspector may form a preconceived notion that no specific article is mixed in the inspection object, due to improvement in the precision of specific-article detection by the inspection apparatus, and the inspector becoming careless from familiarization with inspection work. In this case, the inspector has a risk of overlooking the mixing in of a specific article.

In order to solve the above problem, one mode of the present invention applies the following constitutions. An alert output timing control apparatus, comprising a processor and a memory, the alert output timing control apparatus being coupled to a display apparatus, the memory being configured to hold: an analysis target image; a model configured to output, when an image is input to the model, whether an alert target object is included in a photographic object of the image; and/or time information indicating a period of time to be spent until alert is output, the processor is configured to: output the analysis target image to the display apparatus; input the analysis target image to the model; obtain, when it is determined that the alert target object is included in the photographic object of the analysis target image, a period of time from the time information; and/or perform control so that the alert is output at timing that arrives when the obtained period of time elapses since given timing after the analysis target image is output.

One mode of the present invention can decrease the risk of overlooking, by the inspector, the mixing in of the specific article.

Problems, configurations, and effects which are not mentioned above are explained in the following embodiments.

### BRIEF DESCRIPTIONS OF DRAWINGS

The present invention can be appreciated by the description which follows in conjunction with the following figures, wherein:
FIG. 1 is a block diagram for illustrating a configuration example of an X-ray automatic determination system;
FIG. 2 is a block diagram for illustrating a function configuration example of a server;
FIG. 3 is a flow chart for illustrating an example of processing by the X-ray automatic determination system;
FIG. 4 is an example of an X-ray image display time setting table;
FIG. 5 is an example of an X-ray image display screen to be displayed on a display apparatus of a client; and
FIG. 6 is an example of a setting screen to be displayed on the display apparatus of the client to set the X-ray image display time setting table.

### [First Embodiment]

In the following, an embodiment of the present invention is explained referring the attached drawings. The embodiment is an example to achieve the present invention and does not limit a technical range of the present invention. In the drawings, the same configuration has the same reference letter.

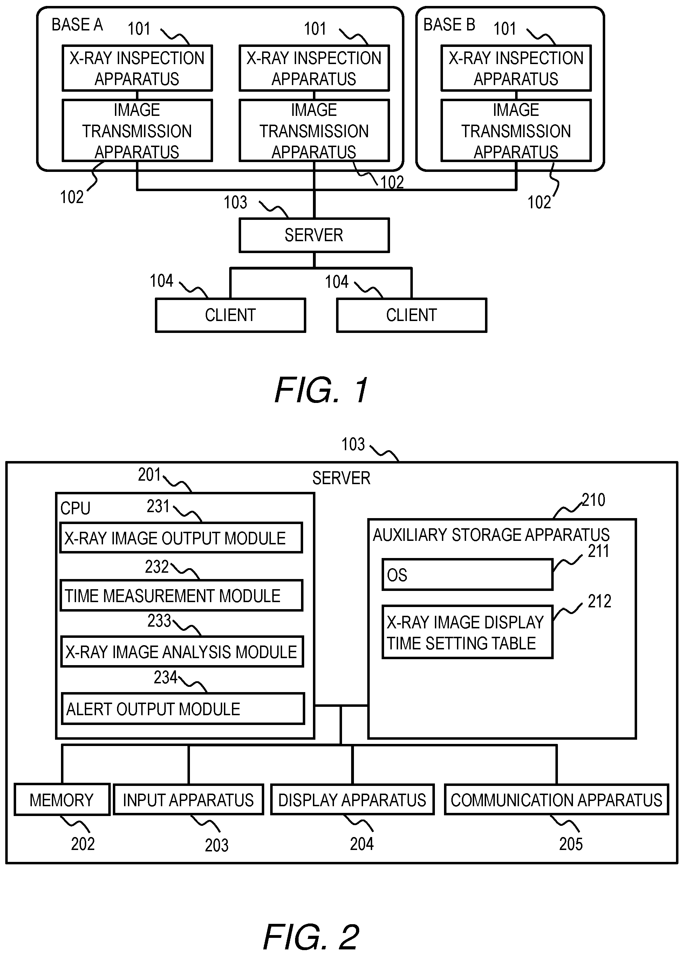

FIG. 1 is a block diagram for illustrating a configuration example of an X-ray automatic determination system. The X-ray automatic determination system includes, for example, one or more X-ray inspection apparatus 101, one or more image transmission apparatus 102, a server 103, and one or more clients 104.

The pieces of equipment included in the X-ray automatic determination system are coupled via the Internet, an intranet, or other networks so that communication can be held among one another. In particular, each of the X-ray inspection apparatus 101 and each of the image transmission apparatus 102 are coupled to each other, each of the image transmission apparatus 102 and the server 103 are coupled to each other, and the server 103 and each of the clients 104 are coupled to each other. The X-ray automatic determination system may use any communication method as long as data can be transferred.

The X-ray inspection apparatus 101 are each configured to create an X-ray image by, for example, irradiating a photographic object with an X ray and measuring the amount of a transmitted X ray. The X-ray inspection apparatus 101 are each installed at, for example, a base of baggage inspection (for instance, installed at a position from which a top of a conveyor for baggage inspection at a security checkpoint can be photographed), as many as required, to be used as a baggage inspection apparatus for security check at an airport, or a similar purpose.

In the example of FIG. 1, Base A and Base B are bases of baggage inspection. The server 103 and the clients 104 may be installed at Base A and Base B as required.

The image transmission apparatus 102 are each configured to cut out, for example, each piece of baggage in an X-ray image photographed by the X-ray inspection apparatus 101 (for example, divide the photographed image into images each bearing a piece of baggage), and transmit each X-ray image created by the cutting out to the server 103. Image cutout processing executed by the image transmission apparatus 102 is executed in order to facilitate image analysis processing described later.

In the cutout processing, each image transmission apparatus 102 may set any cutout range so that, for example, the entire area of a screen of the client 104 that is available for display is set as one segment of an X-ray image, or so that an X-ray image photographed in a period from a point in time at which the conveyor configured to convey baggage starts moving to a point in time at which the conveyor stops moving is set as one segment of an X-ray image. The cutout processing may not always be executed.

The server 103 is configured to analyze the X-ray image received from the image transmission apparatus 102, to thereby determine whether a specific article is included in a photographic object of the X-ray image. When determining that a specific article is included in the photographic object of the X-ray image, the server 103 outputs alert to the client 104 after a length of time set in advance elapses.

The server 103 may be integrated with at least one of the image transmission apparatus 102, the X-ray inspection apparatus 101, and the client 104. In particular, a computer (for example, a personal computer (PC)) belonging to the X-ray inspection apparatus 101, for example, may be provided to have the functions of the server 103 and the client 104.

The clients 104 are each configured to display the X-ray image processed by the server 103. The image transmission apparatus 102 and each client 104 are computers, for example, PCs, and each include a display apparatus on which a calculation result received from the server 103 can be displayed.

FIG. 2 is a block diagram for illustrating a function configuration example of the server 103. The server 103 is implemented by a computer including, for example, a central processing unit (CPU) 201, a memory 202, an input apparatus 203, a display apparatus 204, a communication apparatus 205, and an auxiliary storage apparatus 210, which are coupled to one another by a bus or a similar internal communication line.

The CPU 201 includes a processor, and is configured to execute a program stored in the memory 202. The memory 202 includes a ROM, which is a nonvolatile memory device, and a RAM, which is a volatile memory device. The ROM stores, for example, an invariant program (for example, BIOS). The RAM is a dynamic random access memory (DRAM) or other such high-speed volatile memory device, and temporarily stores a program to be executed by the processor and data to be used at a time of execution of the program.

The auxiliary storage apparatus 210 is, for example, a magnetic storage device (HDD), a flash memory (SSD), or other such large-capacity nonvolatile storage apparatus, and stores the program to be executed by an operating system (OS) 211 and the CPU 201 and the data to be used at the time of the execution of the program. In other words, the program is read from the auxiliary storage apparatus 210, and loaded onto the memory 202 to be executed by the CPU 201.

The server 103 may include an input interface and an output interface. The input interface is an interface to which the input apparatus 203, for example, a keyboard and a mouse, is coupled, and which is configured to receive input from an operator. The output interface is an interface to which the output apparatus 204, for example, a display apparatus and a printer, is coupled, and which is configured to output a result of executing a program in a format visually recognizable to the operator. The communication apparatus 205 is a network interface apparatus configured to control communication to and from other apparatus by following a given protocol.

The program to be executed by the CPU 201 is provided to the computer through intermediation of a removable medium (for example, CD-ROM or flash memory) or through the network, and is stored in the nonvolatile auxiliary storage apparatus 210 being a non-transitory storage medium. Therefore, the server 103 preferably include an interface configured to read data from the removable medium.

The CPU 201 includes, for example, an X-ray image output module 231, a time measurement module 232, an X-ray image analysis module 233, and an alert output module 234. The X-ray image output module 231 is configured to output an X-ray image received from the image transmission apparatus 103 to the client 104. The time measurement module 232 is configured to measure a time spent until alert is output by the alert output module 234.

The X-ray image analysis module 233 is configured to analyze an X-ray image to determine whether there is a specific article in the X-ray image. For example, a model configured to output a result indicating the presence or absence of a specific article when an X-ray image is input is stored in advance in the memory 202 or the auxiliary storage apparatus 210, and the X-ray image analysis module 233 uses this model to determine whether there is a specific article in an X-ray image. The model may be configured so as to be capable of further outputting, when a specific article is present in an X-ray image, the name of the specific article and a position in the X-ray image at which the specific article is located. The model can determine whether there is a specific article in an X-ray image by using, for example, at least one of the shape, material, and density of an article present in the X-ray image. When the X-ray image analysis module 233 determines that there is a specific article in an X-ray image, the alert output module 234 outputs alert to the client 104.

For example, the CPU 201 functions as the X-ray image output module 231 by operating as programmed by an X-ray image output program loaded onto the memory 202, and functions as the time measurement module 232 by operating as programmed by a time measurement program loaded onto the memory 202. The same applies to a relationship between the rest of the function modules included in the server 103 and programs.

The auxiliary storage apparatus 210 holds, for example, the operating system (OS) 211 and an X-ray image display time setting table 212. The X-ray image display time setting table 212 indicates a time spent until alert informing of inclusion of a specific article in an X-ray image is output.

In the first embodiment, information used by each apparatus included in the X-ray automatic determination system does not depend on data structure and may have any data structure. For example, a data structure appropriately selected from the group consisting of a table, a list, a database, and a queue can be used to store the information.

Each apparatus included in the X-ray automatic determination system in the first embodiment is a computer system built on a single physical computer, or on a plurality of logically or physically configured computers, and may run in separate threads on the same computer, or on a virtual computer built from a plurality of physical computer resources.

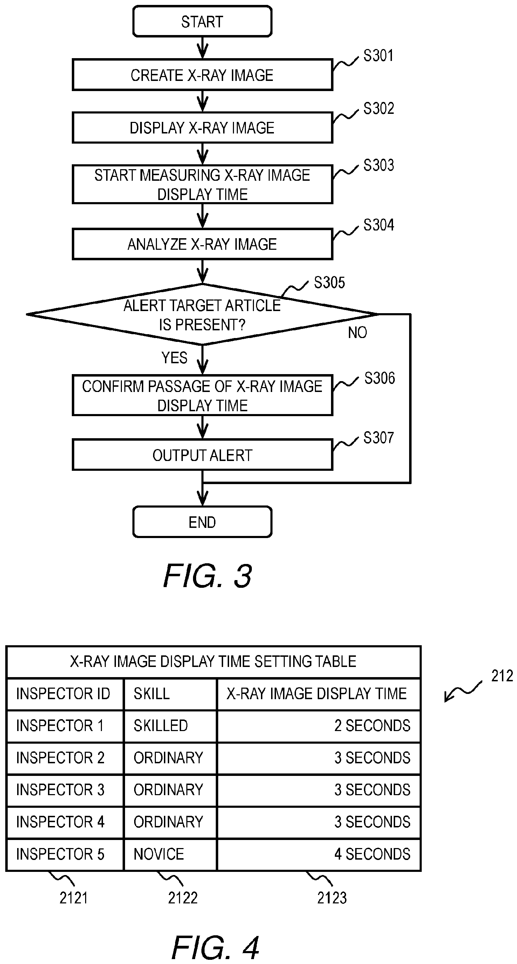

FIG. 3 is a flow chart for illustrating an example of processing by the X-ray automatic determination system. Before the processing of FIG. 3 is started, values in the X-ray image display time setting table 212 are set. First, the X-ray inspection apparatus 101 photographs an X-ray image of one or more pieces of baggage and transmits each of the X-ray images to the image transmission apparatus 102, and the image transmission apparatus 102 obtains the X-ray image, cuts each piece of baggage out of the obtained X-ray image, and transmits a resultant X-ray image to the server 103 (Step S301).

The X-ray image output module 231 transmits the X-ray image to the client 104, and the client 104 displays the received X-ray image on the display apparatus of the client 104 (Step S302). When the server 103 and the client 104 are integrated into one apparatus, the X-ray image output module 231 displays the X-ray image on the display apparatus 204. The processing of Step S302 may be executed at any timing after the processing of Step S301 and before the processing of Step S306.

The time measurement module 232 starts time measurement from, for example, a time at which an inspector starts checking the X-ray image (Step S303). The time at which the inspector starts checking the X-ray image (namely, timing to start time measurement) in Step S303 is some point in time after the processing of Step S302 and before the processing of Step S306. As the timing to start time measurement, any timing may be employed as long as the timing is a time at which the inspector starts checking the image, for example, a time at which the server 103 receives a notification informing that a sensor provided inside the X-ray inspection apparatus 101 has determined that an article has been passed, or a time at which the server 103 determines that scrolling display of a screen output to the client 104 is to be stopped (that a tail end of the piece of baggage is contained within a display area of the display apparatus of the client 104). Timing at which the server 103 receives the X-ray image created by the cutting out in Step S301 may also be employed as the timing to start time measurement.

Subsequently, the X-ray image analysis module 233 analyzes the X-ray image received in Step S301 (Step S304). The X-ray image analysis module 233 searches the X-ray image to determine whether a specific article is present in the X-ray image, based on a result of the image analysis of Step S304 (Step S305). In the following description, a specific article to be searched for by the X-ray image analysis module 233 is also referred to as "alert target article". When the X-ray image analysis module 233 determines that no alert target article is present in the X-ray image (Step S305: NO), the processing of FIG. 3 is ended. After the processing of FIG. 3 is ended, the measurement of an X-ray image display time started to be measured in Step S303 is ended, and the measured time is reset.

When the X-ray image analysis module 233 determines that an alert target article is present in the X-ray image (Step S305: YES), the alert output module 234 obtains an X-ray image display time from the X-ray image display time setting table 212, and confirms that the X-ray image display time measured since Step S303 has exceeded the obtained X-ray image display time (Step S306).

In the X-ray image display time setting table 212, a different X-ray image display time may be set for a different inspector (user logged in to the client 104), details of which are described later with reference to FIG. 4. In this case, the alert output module 234 obtains an X-ray image display time associated with the current inspector from the X-ray image display time setting table 212.

The alert output module 234 transmits alert information to the client 104, and the client 104 outputs alert (Step S307). Specifically, the client 104 calls the inspector's attention by, for example, emphasizing the alert target article in the X-ray image displayed on the display apparatus with a frame, an arrow, or the like, or outputting a warning sound from a speaker coupled to the client 104, or displaying a letter, a mark, or the like that indicates the detection of an alert target article on the display apparatus of the client 104.

To give another example, the client 104 may light a lamp coupled to the client 104, or the server 103 may cause a conveyor belt for baggage conveyance coupled to the X-ray inspection apparatus 101 to stop with output of alert information to the X-ray inspection apparatus 101, to thereby call the attention of the inspector or the outside.

The client 104 may include an input apparatus so that the inspector outputs alert by operating the input apparatus at timing of the inspector's discretion. Alert may be output by operation of a user of the X-ray inspection apparatus 101 when, for example, the next piece of baggage is loaded in the X-ray inspection apparatus 101.

Through the processing described above, alert is output when the server 103 determines that there is an alert target article in an X-ray image after the inspector visually observes the X-ray image. Alert is thus output when the server 103 determines that there is an alert target article in an X-ray image after the inspector executes a solid visual check on the X-ray image without a preconceived notion formed by output of, or a lack of output of, alert. Accordingly, the strict determination by the inspector and the determination by the server 103 improve the precision of detection of an alert target article in baggage.

When the X-ray analysis module 233 determines that no alert target article is present in the X-ray image (Step S305: NO), information indicating the absence of an alert target article may be transmitted to the client 104 to be displayed by the client PC on the display apparatus. The absence of an alert target article may also be notified by a method similar to the alert output method described above.

When the X-ray image analysis module 233 determines in Step S305 that a plurality of alert target articles are present in the X-ray image, the alert output module 234 may output, for example, alert that involves display of a frame, an arrow, or the like for every one of the plurality of alert target articles in the X-ray image, or may output alert that involves display of a frame, an arrow, or the like for each of a given number of alert target articles picked out in descending order of predetermined priority in the X-ray image.

When the X-ray image analysis module 233 determines in Step S305 that a plurality of alert target articles are present in the X-ray image, the alert output module 234 may output alert after the elapse of, for example, a time longer than the X-ray image display time indicated by the X-ray image display time setting table 212 (for example, a length of time calculated by adding a given value to the X-ray image display time), or a time shorter than the X-ray image display time (for example, a length of time calculated by subtracting a given value from the X-ray image display time).

The model used by the X-ray image analysis module 233 for X-ray image analysis may output, when an X-ray image is input, a result indicating whether a non-alert target article that resembles an alert target article is present in the X-ray image. In this case, the presence of a non-alert target article that resembles an alert target article in the X-ray image may be notified in Step S307. It is preferred to execute the notification after a time longer than the time set in the X-ray image display time setting table 212 (for example, a length of time calculated by adding a given value to the set time) elapses, in order to give the inspector plenty of time to visually determine the presence of a non-alert target article that resembles an alert target article.

In a period from the display of an X-ray image in Step S302 to the output of alert in Step S307 (when alert is not output, a period starting with the display of an X-ray image and ending with, for example, the elapse of a given length of time), the inspector may input a result indicating whether an alert target article is included in the X-ray image to the client 104. The client 104 transmits the input result to the server 103, and the server 103 may accumulate, for each inspector, the input result and the result of determination by the X-ray image analysis module 223 in association with each other. This enables a user of the server 103 to check the degree of match between the result of inspection by the inspector and the result of determination by the X-ray image analysis module 223, and recognize, when the degree of match is low, that the precision of inspection by the inspector or the precision of the model used by the X-ray image analysis module 223 is low.

When a determination result indicating that an alert target article is present is input by the inspector to the server 103 via the client 104, or when alert is output in Step S307, the alert output module 234 may, for example, set a long period of time (for example, a length of time calculated by adding a given value to the X-ray image display time indicated by the X-ray image display time setting table 212) as a period of time to be spent until the next alert is output. This enables the inspector to execute a more solid visual check on X-ray images of baggage of the second and subsequent persons when a plurality of persons bring in alert target articles.

When the inspector inputs a determination result telling that an alert target article is present in an X-ray image picked up by one X-ray inspection apparatus 101 to the server 103 via the client 104, or when alert is output in Step S307, the alert output module 234 may set a long period of time (by, for example, adding a given value to the X-ray image display time indicated by the X-ray image display time setting table 212) as a period of time to be spent until the next alert is output, for an X-ray image picked up by another X-ray inspection apparatus 101 (the X-ray inspection apparatus 101 of another base may be included). This enables the inspector to execute a more solid visual check on X-ray images of baggage of the second and subsequent persons when a plurality of persons bring in alert target articles.

In the example of FIG. 3, the alert output module 234 transmits the alert information to the client 104 after the X-ray image display time elapses. The alert output module 234, however, may transmit to the client 104 alert information indicating an output time at which alert is to be output, at the time of determination that an alert target article is included in the X-ray image in Step S305, so that the client 104 outputs alert at the output time indicated by the alert information.

FIG. 4 is an example of the X-ray image display time setting table 212. The X-ray image display time setting table 212 includes, for example, fields for an inspector ID 2121, skill 2122, and an X-ray image display time 2123.

The field for the inspector ID 2121 stores an ID by which an inspector (namely, a user who visually inspects an X-ray image displayed on the client 104) is uniquely identified. The field for the skill 2122 stores a value indicating the inspector's skill. The field for the X-ray image display time 2123 stores a time from the start of the measurement in Step S303 to the output of alert in Step S307.

In the example of the X-ray image display time setting table 212 of FIG. 4, an X-ray image display time is set for each inspector separately by setting a length of time based on the inspector's skill. The field for the skill 2122 may be omitted from the X-ray image display time setting table 212 by determining an X-ray image display time specific to each inspector.

The X-ray image display time setting table 212 may include a field for storing a difficulty level of inspection work instead of, or in addition to, the fields for the inspector ID 2121 and the skill 2122. An X-ray image display time can thus be determined for each difficulty level of inspection work. For example, when the X-ray image display time is set longer for inspection work that has a higher difficulty level, the inspector can take plenty of time to visually check an X-ray image in inspection work having a high difficulty level. In this case, an inspection work name or a difficulty level is input to the server 103 via the client 104 before, for example, the processing of FIG. 3.

In the X-ray image display time setting table 212, an X-ray image display time specific to each inspector or each skill level may be replaced by a single X-ray image display time of any length set in advance. In the X-ray image display time setting table 212, an X-ray image display time depending on the inspection time zone may be set instead of, or in addition to, an X-ray image display time specific to each inspector or each skill level.

In another example, an X-ray image display time set in the X-ray image display time setting table 212 may be used as an initial value and weakly increased by an amount based on the time that has elapsed since the start of inspection by the inspector (for example, a login time at which the inspector logs in to the client 104 is regarded as an inspection start time, and the client 104 notifies the login time to the server 103). This enables the inspector to take plenty of time for visual inspection until alert is output, because the inspector becomes more fatigued as the time that has elapsed since the start of inspection increases. The X-ray image display time may also be prolonged depending on an image's complexity, or busyness, which is determined by the server 103 from the number of articles recognized by the X-ray inspection apparatus 101, from a total area of dense parts of the image of baggage, or from other indicators.

The X-ray image display time setting table 212 may include, for example, a field for storing the degree of hazard of an alert target article instead of, or in addition to, the fields for the inspector ID 2121 and the skill 2122. An X-ray image display time can thus be determined for each degree of hazard of an alert target article. For example, when the X-ray image display time is set shorter for an alert target article having a higher degree of hazard, alert for an alert target article having a high degree of hazard is output before the inspector finishes visual inspection of the X-ray image, and the inspector can continue a thorough and detailed visual check of the X-ray image after the output of the alert.

The X-ray image display time setting table 212 may include, for example, a field for indicating an inspection high in the number of alert target articles, an inspection empirically suspected to be high in the ratio of mixing in of alert target articles, or an inspection in which a strict transportation condition is set, instead of, or in addition to, the fields for the inspector ID 2121 and the skill 2122. When the X-ray image display time is set long for those inspections, for example, the inspector can take plenty of time to visually check an X-ray image for which alert is highly likely to be output.

When the server 103 accumulates, as described above, for each inspector, the result of determination by the inspector and the result of determination by the X-ray image analysis module 223 in association with each other, the CPU 201 of the server 103 may modify the X-ray image display time setting table 212 so that the skill is downgraded for an inspector who has a low degree of match (for example, a given threshold value or lower) between the result of determination by the inspector and the result of determination by the X-ray image analysis module 223, or so that the X-ray image display time is extended (by, for example, adding a given value) for the inspector having a low degree of match. This gives a longer visual inspection time to an inspector low in the precision of determination.

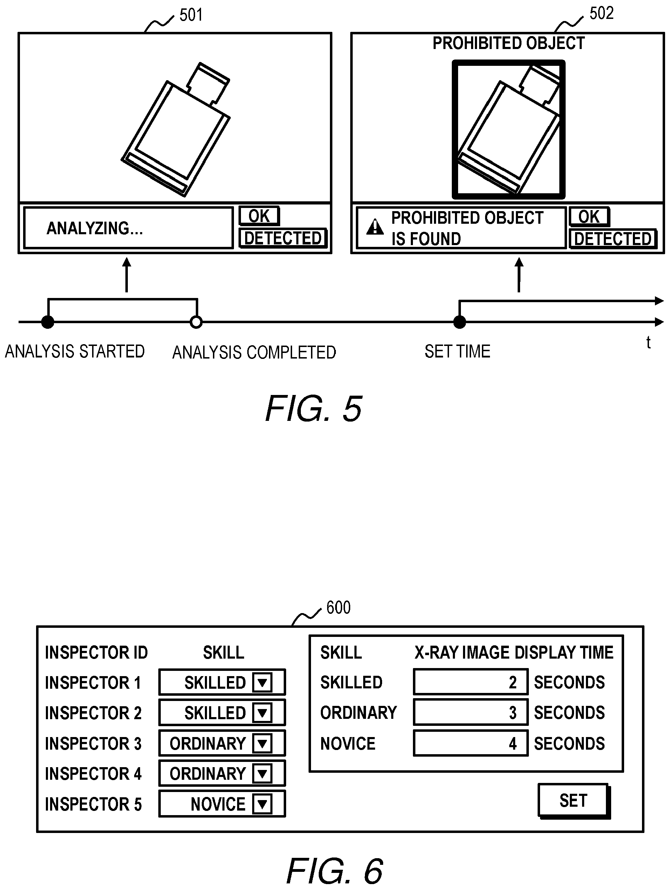

FIG. 5 is an example of an X-ray image display screen to be displayed on the display apparatus of the client 104. The horizontal axis is a time axis. A display screen 501 is a screen displayed from the time when an X-ray image is displayed in Step S302 until the X-ray image display time elapses in Step S306. The display screen 501 displays an X-ray image photographed by the X-ray inspection apparatus 101.

A display screen 502 is a screen displayed when alert is output in Step S307 after the X-ray image display time elapses in Step S306. The display screen 502 displays an X-ray image in which a frame is displayed around an alert target article, and a message ("prohibited item is found") informing that an alert target article is included in the X-ray image.

The display screen 501 and the display screen 502 also display input buttons (an "OK" button and an "DETECTED" button) for inputting the result of X-ray image determination by the inspector's visual inspection. Text information indicating progress of the processing of this system, for example, a message informing that the X-ray image is being analyzed and a message informing that the set X-ray image time has elapsed, may be displayed on the display screen 501 and the display screen 502.

FIG. 6 is an example of a setting screen to be displayed on the display apparatus of the client 104 to set the X-ray image display time setting table 212. A setting screen 600 includes, for example, an area for setting skill for each inspector ID and an area for setting an X-ray image display time for each skill level.

In the example of FIG. 6, the skill of an inspector is classified into three stages, namely, skilled, ordinary, and novice. However, the skill may be classified into any number of stages. The setting screen may be configured so that an X-ray image display time can directly be set for each inspector independently of the skill. The setting screen may also be configured so that an inspector himself or herself can set an X-ray image display time each time inspection is executed.

This invention is not limited to the at least one embodiment described above, and encompasses various modification examples. For example, the at least one embodiment has described this invention in detail for the ease of understanding, and this invention is not necessarily limited to a mode that includes all of the configurations described above. A part of the configuration of one embodiment may be replaced with the configuration of another embodiment, and the configuration of one embodiment may be used in combination with the configuration of another embodiment. In each embodiment, another configuration may be added to, deleted from, or replace a part of the configuration of the embodiment.

For instance, although the first embodiment described above deals with an example of an inspection apparatus that photographs an X-ray image of baggage, any image taken by methods other than X-ray irradiation can be used as long as the image is recognizable as an image, and usable images include an image from which an apparatus can detect the composition, density, and shape of a specific material. The photographic object is not limited to baggage. For instance, the first embodiment is also employable for crime detection that uses an image photographed by a security camera, detection of a focus of disease that uses an image photographed by a magnetic resonance imaging (MRI) machine, and other applications.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. An alert output timing control apparatus, comprising a processor and a memory,
the alert output timing control apparatus being coupled to a display apparatus,
the memory being configured to hold:
an analysis target image;
a model configured to output, when an image is input to the model, whether an alert target object is included in a photographic object of the image; and
time information indicating a period of time to be spent until alert is output,
the processor being configured to:
output the analysis target image to the display apparatus;
input the analysis target image to the model;
obtain, when it is determined that the alert target object is included in the photographic object of the analysis target image, a period of time from the time information; and
perform control so that the alert is output at timing that arrives when the obtained period of time elapses since given timing after the analysis target image is output.

2. The alert output timing control apparatus according to claim 1, wherein the time information indicates, for each inspector ID, a period of time to be spent until the alert is output, and
wherein the processor is configured to:
receive input of an inspector ID; and
obtain, when it is determined that the alert target object is included in the photographic object of the analysis target image, a period of time associated with the received inspector ID from the time information.

3. The alert output timing control apparatus according to claim 2, wherein the time information indicates association between the inspector ID and an inspection skill level, and
wherein, in the time information, the period of time to be spent until the alert is output is shorter for the inspection skill level that is higher.

4. The alert output timing control apparatus according to claim 3, wherein the processor is configured to:
output, to the display apparatus, areas for receiving input of a skill level for each inspector ID and a period of time for each skill level; and
update the time information based on the skill level input for each inspector ID and the period of time input for each skill level, which are input with use of the areas.

5. The alert output timing control apparatus according to claim 2, wherein the memory is configured to hold a first determination history indicating a result of determination that is executed by an inspector associated with the inspector ID with regards to whether the alert target object is included in a photographic object of an analysis target image, and a second determination history indicating a result of determination that is executed by the alert output timing control apparatus with regards to whether the alert target object is included in the photographic object of the analysis target image, and
wherein the processor is configured to:
identify an inspector for whom a degree of match between a determination result indicated by the first determination history and a determination result indicated by the second determination history is equal to or less than a given value; and
add a given value to a period of time that is set, in the time information, for an inspector ID associated with the identified inspector.

6. The alert output timing control apparatus according to claim 1, wherein the processor is configured to:
receive input of an inspection start time of inspection by an inspector;
calculate, based on a time elapsed since the inspection start time, a period of time by weakly increasing a period of time that is indicated by the time information; and
perform control so that the alert is output at timing that arrives when the calculated period of time elapses since the given timing.

7. The alert output timing control apparatus according to claim 1, wherein the memory is configured to hold a plurality of analysis target images, and
wherein the processor is configured to:
obtain a period of time from the time information when it is determined that the alert target object is included in a photographic object of one of the plurality of analysis target images, and that the alert target object is included in a photographic object of a next analysis target image, which is another of the plurality of analysis target images that is input next to the model; and
perform control so that the alert is output at timing that arrives when a period of time calculated by adding a given value to the obtained period of time elapses since given timing after the next analysis target image is output.

8. The alert output timing control apparatus according to claim 1,
wherein the model is configured to output, when an image is input to the model, whether an alert-target-object resembling object is included in a photographic object of the image, and
wherein the processor is configured to perform, when it is determined that the alert-target-object resembling object is included in the photographic object of the analysis target image, control so that the alert is output at timing that arrives when a period of time calculated by adding a given value to a period of time indicated by the time information elapses since given timing after the analysis target image is output.

9. The alert output timing control apparatus according to claim 1, wherein the processor is configured to perform, when it is determined that a plurality of alert target objects are included in the photographic object of the analysis target image, control so that the alert is output at timing that arrives when a period of time elapses since given timing after the analysis target image is output, the period of time being calculated by performing one of addition of a given value to a period of time indicated by the time information, and subtraction of a given value from the period of time indicated by the time information.

10. An alert output timing control method by an alert output timing control apparatus,
the alert output timing control apparatus comprising a processor and a memory, and being coupled to a display apparatus,
the memory being configured to hold:
an analysis target image;
a model configured to output, when an image is input to the model, whether an alert target object is included in a photographic object of the image; and
time information indicating a period of time to be spent until alert is output,
the alert output timing control method includes:
outputting, by the processor, the analysis target image to the display apparatus;
inputting, by the processor, the analysis target image to the model;
obtaining, by the processor, when it is determined that the alert target object is included in the photographic object of the analysis target image, a period of time from the time information; and
performing, by the processor, control so that the alert is output at timing that arrives when the obtained period of time elapses since given timing after the analysis target image is output.

11. A computer-readable non-transitory storage medium having stored thereon a program for causing an alert output timing control apparatus to execute alert output timing control,
the alert output timing control apparatus comprising a processor and a memory, and being coupled to a display apparatus,
the memory being configured to hold:
an analysis target image;
a model configured to output, when an image is input to the model, whether an alert target object is included in a photographic object of the image; and
time information indicating a period of time to be spent until alert is output,
the program causing the alert output timing control apparatus to execu te:
outputting the analysis target image to the display apparatus;
inputting the analysis target image to the model;
obtaining, when it is determined that the alert target object is included in the photographic object of the analysis target image, a period of time from the time information; and
performing control so that the alert is output at timing that arrives when the obtained period of time elapses since given timing after the analysis target image is output.
